Europäisches Patentamt

European Patent Office

Office européen des brevets

(11) Veröffentlichungsnummer: **0 497 995 A1**

## EUROPÄISCHE PATENTANMELDUNG

(21) Anmeldenummer: **91101332.4**

(22) Anmeldetag: **01.02.91**

(51) Int. Cl.5: **F04C 23/00**, F01C 21/02

(43) Veröffentlichungstag der Anmeldung:
**12.08.92 Patentblatt 92/33**

(84) Benannte Vertragsstaaten:
**AT BE CH DE DK ES FR GB GR IT LI LU NL SE**

(71) Anmelder: **LEYBOLD AKTIENGESELLSCHAFT**
**Wilhelm-Rohn-Strasse 25, Postfach 1555**
**W-6450 Hanau am Main 1(DE)**

(72) Erfinder: **Berges, Hanns-Peter, Dr.**
**Neusser Strasse 29**
**W-5000 Köln 90(DE)**

(74) Vertreter: **Leineweber, Jürgen, Dipl.-Phys.**
**Nagelschmiedshütte 8**
**W-5000 Köln 40(DE)**

(54) **Trockenlaufende Vakuumpumpe.**

(57) Die Erfindung bezieht sich auf eine trockenlaufende Vakuumpumpe (1) mit mindestens einer vertikal angeordneten Welle (2, 3), die in einem oberen Lagerschild (14) mit Hilfe eines geschmierten, in einem nach oben offenen Topfbauteil (51) befindlichen Wälzlagers (27) gelagert ist; um im Bereich dieses Lagers (27) die Anzahl der Fügestellen zu reduzieren, wird vorgeschlagen, daß dem nach oben offenen Topfbauteil (51) ein am Gehäuse befestigtes, nach unten offenes Topfbauteil (54) zugeordnet ist, dessen Wandung (55) in das wellenseitige Topfbauteil (51) hineinragt und auf deren Innenseite sich das Wälzlager (27) mit seinem gehäusefesten Lagerring (62) abstützt.

EP 0 497 995 A1

Die Erfindung bezieht sich auf eine trockenlaufende Vakuumpumpe mit mindestens einer vertikal angeordneten Welle, die in einem oberen Lagerschild mit Hilfe eines geschmierten, in einem nach oben offenen Topfbauteil befindlichen Wälzlagers gelagert ist.

"Trockenlaufende" Vakuumpumpen sind Pumpen, deren Schöpfräume keine Schmier- und/oder Dichtmittel enthalten. Ihr Vorteil liegt darin, daß sie vollständig kohlenwasserstoffreie Vakua erzeugen können. Auf die Schmierung der Lagerungen der Wellen, die die in den Schöpfräumen rotierenden Kolben tragen, kann jedoch nicht verzichtet werden. Bei trockenlaufenden Pumpen besteht deshalb die Notwendigkeit, eine wirksame Trennung der Lagerräume von den Schöpfräumen zu gewährleisten.

Aus der EU-A-290 662 ist eine trockenlaufende Zweiwellenvakuumpumpe der eingangs genannten Art bekannt. Um eine Trennung der oberen Lagerräume von den benachbarten Schöpfräumen zu erzielen, wird vorgeschlagen, die oberen Enden der Wellen mit einem nach oben offenen Topfbauteil auszurüsten, das aus den Lagern austretendes Lagerfett auffängt. Die innerhalb des Topfes befindlichen Wälzlager haben einen rotierenden Außenring, der sich auf der Innenwandung des Topfbauteiles abstützt. Der ruhende Innenring stützt sich seinerseits auf einem in das Topfbauteil hineinragenden, gehäusefesten Stumpf ab. Bei dieser Lösung befindet sich - im Vergleich zu üblichen Wellenlagerungen - zwischen der Welle selbst und dem mit der Welle rotierenden Lagerring ein separates Bauteil, so daß zusätzliche Fügestellen vorhanden sind, die eine korrekte Wellenführung beeinträchtigen können.

Der vorliegenden Erfindung liegt die Aufgabe zugrunde, eine Vakuumpumpe der eingangs genannten Art zu schaffen, bei der trotz des Vorhandenseins eines Topfbauteiles im Bereich des oberen Endes der Welle die geschilderten Beeinträchtigungen hinsichtlich der Wellenführung vermieden sind.

Erfindungsgemäß wird diese Aufgabe dadurch gelöst, daß dem am oberen Wellenende unterhalb des Wälzlagers befestigten, nach oben offenen Topfbauteil ein am Gehäuse befestigtes, nach unten offenes Topfbauteil zugeordnet ist, dessen Wandung in das nach oben offene, wellenseitige Topfbauteil hineinragt und auf deren Innenseite sich das Wälzlager mit seinem gehäusefesten Lagerring abstützt. Bei dieser Lösung besteht der Vorteil, daß die Welle - wie bei einer üblichen Wellenlagerung - dem mitrotierenden Innenring des Wälzlagers unmittelbar anliegt, zusätzliche, die Wellenführung beeinträchtigende Bauteile bzw. Fügestellen also nicht vorhanden sind. Ein weiterer Vorteil besteht darin, daß sich eine kompakte Bauweise ergibt, da sowohl die Innenseite als auch die Außenseite des mit der Welle rotierenden Topfbauteiles zur Bildung von Spaltdichtungen herangezogen werden können. Von den beiden beim Gegenstand der Erfindung axial nebeneinander (und nicht axial hintereinander) liegenden Spaltdichtungen liegt die innere innerhalb des rotierenden Topfbauteiles, so daß in diese Spaltdichtung gelangende Schmiermittel im Inneren des Topfes zurückgehalten werden.

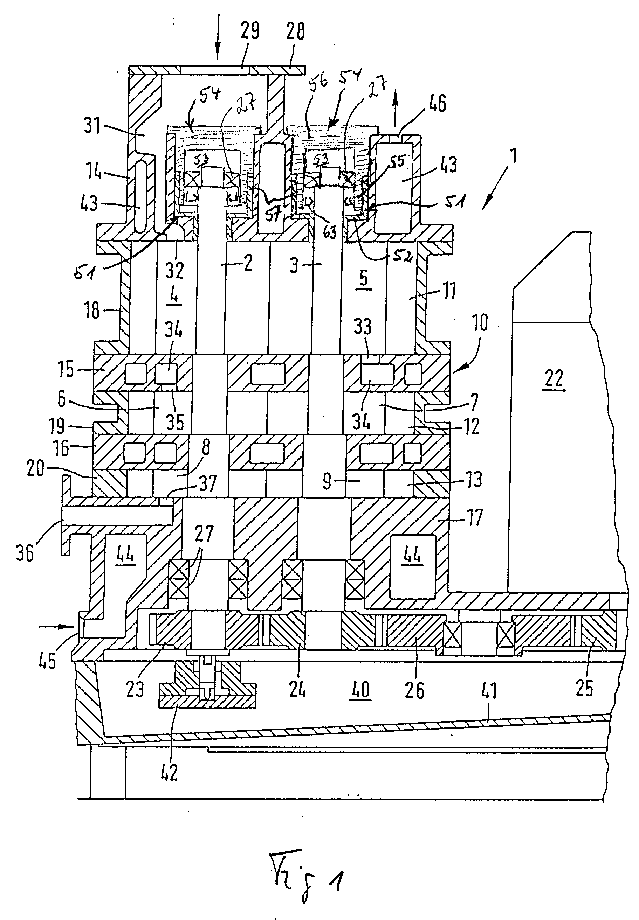

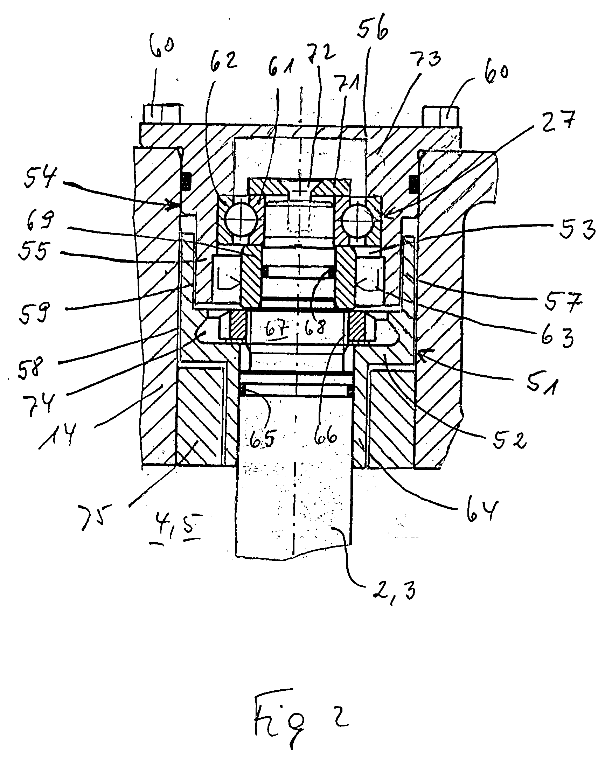

Weitere Vorteile und Einzelheiten der Erfindung sollen anhand von in den Figuren 1 und 2 dargestellten Ausführungsbeispielen erläutert werden. Es zeigen

Figur 1 eine Zweiwellenvakuumpumpe mit oberen Wellenlagerungen nach der Erfindung und

Figur 2 einen vergrößerten Schnitt durch eine Wellenlagerung nach der Erfindung.

Bei der in Figur 1 dargestellten Pumpe handelt es sich um eine dreistufige Vakuumpumpe 1 mit zwei Wellen 2 und 3 sowie drei Rotorpaaren 4, 5 bzw. 6, 7 bzw. 8, 9. Die axiale Länge der Rotoren nimmt von der Saugseite zur Druckseite ab. Die Drehkolben sind vom Klauentyp (Northey, vgl. beispielsweise die Eu-A- 290 662) und rotieren in den Schöpfräumen 11, 12, 13, welche von den Schilden 14 bis 17 und den Gehäuseringen 18 bis 20 gebildet werden.

Die Wellen 2, 3 sind vertikal angeordnet. Dieses gilt ebenfalls für den neben dem Pumpengehäuse angeordneten Antriebsmotor 22. Unterhalb des unteren Lagerschildes 17 sind die Wellen 2, 3 mit Zahnrädern 23, 24 gleichen Durchmessers ausgerüstet, welche der Synchronisation der Bewegung der Rotorpaare 4, 5 bzw. 6, 7 bzw. 8, 9 dienen. Auch der Antriebsmotor 22 weist an seiner Unterseite ein Zahnrad 25 auf. Die Antriebsverbindung wird hergestellt durch ein weiteres Zahnrad 26, das mit den Zahnrädern 24 und 25 in Eingriff steht.

In dem oberen Lagerschild 14 und dem unteren Lagerschild 17 stützen sich die Wellen 2, 3 über Wälzlager 27 ab. Der obere Lagerschild 14 ist mit einem horizontal angeordneten Anschlußflansch 28 ausgerüstet, welcher den Einlaß 29 der Pumpe bildet. Der Einlaßkanal 31 mündet stirnseitig (Öffnung 32) in den Schöpfraum 11 der ersten Stufe. Die stirnseitig angeordnete Auslaßöffnung der ersten Stufe ist mit 33 bezeichnet und führt in den Verbindungskanal 34. Der im Schild 15 befindliche Verbindungskanal 34 steht mit der Einlaßöffnung 35 der zweiten Stufe in Verbindung. Der Lagerschild 16 ist entsprechend gestaltet. Unterhalb der untersten (dritten) Pumpstufe befindet sich der Auslaß 36, der mit der stirnseitigen Auslaßöffnung 37 im unteren Lagerschild 17 in Verbindung steht.

Unterhalb des aus Pumpengehäuse und Motor bestehenden Systems ist ein Öl enthaltender Raum 40, gebildet von einer gemeinsamen Wellenwanne 41, vorgesehen. In diese Wellenwanne 41 hinein ragt eine mit der Welle 2 verbundene Ölpumpe 42. Von der Ölpumpe aus erstrecken sich im einzelnen nicht dargestellt Schmiermittelkanäle zu den Stellen der Pumpe (Lager, Eingriffe der Zahnräder 23 bis 26, Wellendichtringe oder dergleichen), welche einer Ölschmierung bedürfen. Die Lagerungen 27 im Bereich der oberen Wellenenden sind vorzugsweise fettgeschmiert.

Das dargestellte Ausführungsbeispiel der dreistufigen Zweiwellenvakuumpumpe ist wassergekühlt. Dazu sind in den Seitenschilden 14 und 17 Kühlwasserkanäle 43 und 44 vorgesehen. Kühlwassereinlaß und -auslaß sind mit 45 und 46 bezeichnet. Der Kühlwassereinlaß 45 ist an der untersten Stelle des Kanalsystems 43, 44 angeordnet, so daß ein einfacher Kühlwasserablaß möglich und eine vollständige Entleerung sichergestellt sind.

Entsprechend dem Vorschlag nach der Erfindung sind die oberen Wellenenden jeweils mit einem mitrotierenden, nach oben offenen topfförmigen Bauteil 51 ausgerüstet, durch deren Böden 52 die Wellen 2, 3 in die Lagerräume 53 hineinragen. Den Topfbauteilen 51 sind gehäusefeste, nach unten offene Topfbauteile 54 zugeordnet, deren Wandungen 55 in die nach oben offenen Topfbauteile 51 hineinragen und deren Deckel 56 die Lagerräume 53 abschließen. Die Wandungen 57 der rotierenden Topfbauteile 51 bilden mit dem Lagerschild 14 und mit den Außenseiten der Wandungen 55 der gehäusefesten Bauteile 54 jeweils Spaltdichtungen 58, 59 (vgl. Fig. 2), die im Zusammenhang mit Figur 2 näher erläutert sind. Die Lagerringe 61, 62 (vgl. Fig. 2) der Lager 27 stützen sich auf den Wellen 2, 3 selbst und auf den Innenseiten der Wandungen 55 der gehäusefesten Bauteile 54 ab. Nach unten sind die Lagerräume 53 jeweils durch einen Radialwellendichtring 63 abgeschlossen.

Aus dem in Figur 2 detaillierter dargestellten Ausführungsbeispiel ist ersichtlich, daß das Topfbauteil 51 mit Hilfe eines Rohrstutzens 64 dicht auf die Welle 2, 3 aufgeschoben ist (Dichtring 65). Oberhalb des Topfbodens 52 weist die Welle 2, 3 ein Gewinde 66 mit der Mutter 67 auf. Diese Lösung erlaubt es, die Welle mit ihren Rotoren und mit dem Topfbauteil 51 zu verspannen. Oberhalb des Gewindes 66 weist die Welle 2, 3 einen reduzierten Durchmesser auf. An das Gewinde 66 schließen sich eine dicht (Dichtring 68) auf die Welle 2, 3 aufgeschobene Laufbuchse 69 für den Radialwellendichtring 63 und das Lager 27 mit seinem rotierenden Innenring 61 an. Mit Hilfe der Scheibe 71 und der Schraube 72 sind der Lagerring 61 und die Laufbuchse 69 auf dem oberen Ende der Welle 2, 3 befestigt. Aufgrund dieser von der Wellenverspannung unabhängigen Befestigung besteht die Möglichkeit, das Lager 27 und den Radialwellendichtring 63 auszuwechseln, ohne die Rotorverspannung lösen zu müssen. Mit seinem oberen Teil (Deckel 56) ist das Topfbauteil 54 mittels der Schrauben 60 auf dem Lagerschild 14 befestigt und definiert die Position des Lageraußenringes 62.

Das Topfbauteil 51 hat die Aufgabe, im Falle des Versagens des Radialwellendichtringes 63 aus dem Lager 27 austretendes Schmiermittel aufzufangen. In seinem unteren Bereich ist er mit einer Hinterdrehung 74 versehen, die aufgrund der Fliehkräfte als Fangtasche für das Schmiermittel dient. In Richtung Schöpfraum 4, 5 schließen sich die axial nebeneinanderliegenden Spaltdichtungen 59, 58 an und gewährleisten eine sichere Trennung. Zusätzlich bilden auch noch die Außenseiten des Bodens 52 und des Rohrstutzens 64 gemeinsam mit einem in den Lagerschild 14 eingeschrumpften Ring 75 Spalte, die die gewünschte Trennung zwischen Schöpfraum 4, 5 und Lagerring 53 unterstützen.

**Patentansprüche**

1. Trockenlaufende Vakuumpumpe (1) mit mindestens einer vertikal angeordneten Welle (2, 3), die in einem oberen Lagerschild (14) mit Hilfe eines geschmierten, in einem nach oben offenen Topfbauteil (51) befindlichen Wälzlagers (27) gelagert ist, dadurch gekennzeichnet, daß dem nach oben offenen Topfbauteil (51) ein am Gehäuse befestigtes, nach unten offenes Topfbauteil (54) zugeordnet ist, dessen Wandung (55) in das wellenseitige Topfbauteil (51) hineinragt und auf deren Innenseite sich das Wälzlager (27) mit seinem gehäusefesten Lagerring (62) abstützt.

2. Pumpe nach Anspruch 1, dadurch gekennzeichnet, daß sowohl die Innenseite als auch die Außenseite der zylindrischen Wandung des mit der Welle (2, 3) rotierenden Topfbauteiles (51) mit den unmittelbar benachbarten Bauteilen (Außenseite der zylindrischen Wandung (55) des gehäusefesten Topfbauteiles (54), Lagerschild (14) ) Spaltdichtungen (58, 59) bilden.

3. Pumpe nach Anspruch 1 oder 2, dadurch gekennzeichnet, daß der Lagerraum (53) mit Hilfe eines Radialwellendichtringes (63) abgedichtet ist, der sich auf der Welle (2, 3) und auf der Wandung (55) des gehäusefesten Topfbauteiles (54) abstützt.

4. Pumpe nach Anspruch 1, 2 oder 3, dadurch gekennzeichnet, daß die Mittel (71, 72) zur Halterung des Lagers (27) und einer Laufbuchse (69) für den Radialwellendichtring (63) auf dem oberen Ende der Welle (2, 3) unabhängig sind von den Mitteln (66, 67) zur Verspannung der Welle (2, 3) mit ihren Rotoren.

5. Pumpe nach Anspruch 4, dadurch gekennzeichnet, daß das Topfbauteil (51) mit der Welle (2, 3) verspannt ist.

6. Pumpe nach einem der vorhergehenden Ansprüche, dadurch gekennzeichnet, daß das Topfbauteil (51) im unteren Bereich mit einer eine Fangtasche bildenden Hinterdrehung (74) ausgerüstet ist.

7. Pumpe nach einem der vorhergehenden Ansprüche, dadurch gekennzeichnet, daß das Topfbauteil (51) mit Hilfe eines am Boden (52) befindlichen Rohrstutzens (64) dicht auf der Welle (2, 3) gehaltert ist und daß die Außenseite des Bodens (52) und/oder des Rohrstutzens (64) mit einem gehäusefesten Bauteil (Ring 75) Spaltdichtungen bildet.

8. Pumpe nach einem der vorhergehenden Ansprüche, dadurch gekennzeichnet, daß sie eine Zweiwellenvakuumpumpe mit Rotorpaaren vom Klauentyp ist.

Fig. 1

Fig 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 290 662 (LEYBOLD AG)<br>* Das ganze Dokument *<br>----- | 1 | F 04 C 23/00<br>F 01 C 21/02 |
| | | | **RECHERCHIERTE SACHGEBIETE (Int. Cl.5)**<br><br>F 04 C<br>F 01 C |

Der vorliegende Recherchenbericht wurde für alle Patentansprüche erstellt

| Recherchenort | Abschlußdatum der Recherche | Prüfer |
|---|---|---|
| DEN HAAG | 30-09-1991 | DIMITROULAS P. |